# FASCICULE DE BREVET EUROPEEN

(11) **EP 2 802 618 B1**
(45) Date de publication et mention de la délivrance du brevet: **12.08.2015**
(21) Numéro de dépôt: 12819079.0
(22) Date de dépôt: 18.12.2012
(51) Int. Cl.: C08J 3/24, C08L 33/26

(54) **PROCEDE D'INERTAGE DE CANALISATION, DE RESERVOIR ENTERRE OU DE PUITS DE FORAGE METTANT EN OEUVRE UN SAP**
VERFAHREN ZUR INERTISIERUNG EINES ROHRES, UNTERIRDISCHEN TANKS ODER BOHRLOCHES MIT EINEM SAP
METHOD FOR INERTING A PIPE, A BURIED TANK OR A DRILLING WELL USING AN SAP

(30) Priorité: 13.01.2012 FR 1250344
(43) Date de publication de la demande: 19.11.2014
(73) Titulaire: S.P.C.M. SA, 42160 Andrézieux Bouthéon (FR)
(72) Inventeur: DELHEUR, Stéphane, F-42680 Saint Marcellin en Forez (FR); LYOT, Pierre, F-42000 Saint Etienne (FR)
(74) Mandataire: Cabinet Laurent & Charras
(86) Numéro de dépôt international: PCT/FR2012/052965
(87) Numéro de publication internationale: WO 2013/104841

(56) Documents cités:
- FR-A- 1 394 824
- FR-A1- 2 551 451
- FR-A1- 2 646 274

## Description

Dans de nombreux pays, les réglementations obligent les opérateurs à inerter les canalisations non utilisées ainsi que tout réservoir enterré. Il en est de même concernant les puits secs et les puits abandonnés mis en oeuvre dans les forages de gaz ou pétrolier.

Les opérateurs de réseau de canalisation doivent mettre en oeuvre les moyens nécessaires pour que les canalisations et les équipements abandonnés ou non exploités ne puissent présenter un risque pour la sécurité des personnes et des biens.

Ces exigences règlementaires ont pour objet de maîtriser les risques spécifiques que les ouvrages abandonnés peuvent faire courir aux personnes ou aux biens, du fait :
- de la possibilité d'affaissement du terrain ;
- du drainage vers un immeuble d'une éventuelle fuite de gaz ou d'autres fluides ;
- des confusions possibles entre ouvrages lors de travaux à proximité.

Lorsqu'une canalisation du réseau est mise hors exploitation, l'opérateur de réseau est tenu d'adopter une des dispositions suivantes dans l'ordre de priorité ci-dessous :
1) soit de l'utiliser comme fourreau pour recevoir une autre canalisation ;
2) soit de l'abandonner provisoirement en vue d'une utilisation ultérieure comme fourreau.
3) soit de l'abandonner définitivement dans le sol. Dans ce cas, l'opérateur de réseau doit mettre en oeuvre les dispositions destinées à supprimer tout risque ultérieur d'accident ou d'affaissement de terrain.

Les dispositions à prendre pour supprimer ces risques sont l'inertage de canalisations. Par "inertage des canalisations, réservoirs ou puits abandonnés", on entend leur remplissage par une substance inerte pour lesdites canalisations, réservoirs ou puits abandonnés. De manière générale, une fois le remplissage effectué, les extrémités débouchantes sont bouchées pour contenir et protéger la substance injectée.

Les canalisations peuvent être :
- Des tuyaux de gaz,
- Des pipelines de pétrole ou de produits chimiques,
- Des canalisations d'eau (dans beaucoup de cas comme l'irrigation, il n'y a pas une telle obligation).

Le plus souvent les opérateurs cherchent à inerter provisoirement les canalisations et les réutilisent après des durées variables.

Une solution pour inerter les canalisations consiste à remplir la canalisation avec du sable sous forme de slurry. Cette technique reste difficile à mettre en oeuvre car il se forme des bouchons empêchant la propagation du sable. En outre, si on force la propagation avec des pompes haute pression, le remplissage est partiel. Enfin, il est particulièrement difficile de déboucher les tuyauteries avec des pompes haute pression, car la pression nécessaire peut être supérieure à la résistance des tuyaux.

Une autre solution consiste à injecter du béton maigre relativement homogène au moyen de pompes à béton. Toutefois, une telle opération est possible seulement sur des distances courtes, par section, car les pompes à béton utilisées pour les travaux publics ont des pressions limitées. Au contraire, l'utilisation de pompes à béton haute pression présente un risque d'explosion des canalisations qui les condamne définitivement.

Dans le cas d'abandon et d'inertage de canalisations en zone urbaine par exemple, les opérations d'inertage sont très coûteuses. En effet, pour injecter du béton maigre, il est nécessaire d'ouvrir ou de forer le sol, les routes ou trottoirs tous les 100 ou 200 mètres. En effet, au-delà de ces distances, il devient impossible de pousser le béton. Par ailleurs, le matériel pour effectuer ces forages est encombrant et coûteux. De même, les réfections de chaussées endommagées lors de ces opérations sont elles aussi coûteuses et génèrent de nombreux désagréments pour la circulation.

S'agissant des forages gaz ou pétroliers, la réglementation s'applique aux puits secs ou aux puits abandonnés.

Très souvent, les puits secs sont remplis de sable ou de béton maigre, ou une partie en sable et une couverture béton. Pour les endroits difficiles d'accès comme les lacs gelés ou des forages en mer, le transport est particulièrement onéreux, nécessitant l'intervention d'hélicoptères.

Enfin, les réservoirs dont il est question dans l'invention sont le plus souvent d'anciennes stations services désaffectées ou des réservoirs de gaz individuels enterrés.

L'invention se propose de palier à ces difficultés, et de répondre aux attentes suivantes :
- un procédé simple d'utilisation et moins destructif,
- un procédé utilisant un produit :
   o bon marché surtout constitué d'eau,
   o Facile à transporter avec des poids faibles,
   o Donnant en cours de pompage des pertes de charge faibles,
   o Pouvant être extrait par pompage d'eau,
   o Ayant une stabilité de plusieurs années, une fois injecté dans la canalisation, le réservoir ou le puits.

Le Demandeur a mis au point un procédé permettant de répondre à l'ensemble de ces attentes en mettant en oeuvre des polymères superabsorbants ou SAP à fort taux de gonflement dans l'eau.

Plus précisément l'invention a pour objet un procédé d'inertage de canalisations, ou de réservoirs enterrés ou de puits de forage consistant :
- à préparer une composition comprenant au moins un (co)polymère superabsorbant partiellement ou totalement gonflé en présence d'eau,
- à injecter ensuite la composition directement dans les canalisations ou le réservoir enterré ou le puits.

Préférentiellement, le procédé de l'invention comprend une étape supplémentaire qui consiste, une fois l'injection effectuée, à boucher les orifices débouchant des canalisations, réservoirs ou puits. Le bouchage permet selon les cas de contenir et/ou de protéger la composition injectée par exemple des risques d'oxydation, ou bien bactériens qui dégraderaient prématurément le SAP partiellement ou totalement gonflé. Différentes techniques peuvent être utilisées comme par exemple, l'ajout d'un opercule, d'une vanne, d'un bouchon métallique vissé ou collé, l'injection d'une mousse de type polyuréthanne expansée, ou encore la cimentation ou l'ajout de plâtre.

Pour les applications envisagées, le (co)polymère totalement ou partiellement gonflé doit être stable Par stabilité du SAP gonflé, on entend sa capacité à rester dans le temps sous forme de SAP gonflé et à résister aux sels, aux ions métalliques issus de la corrosion des canalisations ou des réservoirs, à l'oxygène dissous dans l'eau, à la température, aux divers polluants résiduels des canalisations, réservoirs ou puits comme par exemple des hydrocarbures, oxydants réducteurs. Il est connu que ces paramètres peuvent provoquer la destruction du réseau tridimensionnel du superabsorbant.

Par définition, ces polymères sont réticulés. Les polymères selon l'invention sont injectés sous forme de superabsorbants partiellement ou totalement gonflés. Il existe de nombreux types de polymères hydrosolubles réticulés, ou pouvant être réticulés, naturels ou synthétiques : Polyvinylalcool, Guar, Alginates, Carboxyméthyle cellulose, Dextran, Xanthan, polyoxyde d'éthylène, ...

Les superabsorbants sont des polymères bien connus dans la chimie de spécialité. Ils se présentent généralement sous forme de poudre. Leur structure basée sur un réseau tridimensionnel assimilable à une multitude de petites cavités ayant chacune d'elles la capacité de se déformer et d'absorber de l'eau leur confère la propriété d'absorber de très grandes quantités d'eau et donc de gonfler. De tels polymères sont par exemple décrits dans le brevet FR 2 559 158 dans lequel il est décrit des polymères réticulés de l'acide acrylique ou méthacrylique, des copolymères greffés réticulés du type polysaccharide / acide acrylique ou méthacrylique, des terpolymères réticulés du type acide acrylique ou méthacrylique / acrylamide / acrylamide sulfoné et leurs sels de métaux alcalino-terreux ou alcalins.

Comme déjà dit, ces polymères ont pour principale caractéristique une forte capacité à gonfler en milieu aqueux. Ils peuvent absorber et conserver des grandes quantités d'eau jusqu'à 100 fois ou plus leur masse en liquide. Ils sont utilisés notamment en agriculture pour retenir l'eau dans les sols, dans les produits d'hygiène pour bébés destinés à contenir l'urine et applications analogues.

Avantageusement, les polymères industriels sont choisis dans le groupe comprenant :
- les copolymères réticulés dérivés de la polymérisation d'acrylamide et d'acide acrylique partiellement ou totalement salifié, de préférence sous la forme d'un sel de sodium ou de potassium,
- des acides polyacryliques réticulés, partiellement ou totalement salifiés, de préférence sous la forme d'un sel de sodium ou de potassium, qui est plus sensible à la salinité de l'eau et en particulier aux sels divalents tels que Ca²⁺ et Mg²⁺.

Dans un mode de réalisation préféré, les (co)polymères sont des copolymères réticulés d'acrylamide et d'acide acrylique partiellement ou totalement salifié et contiendront entre 40 et 90 mol% d'acrylamide et entre 10 et 60 mol% d'acide acrylique partiellement ou totalement salifié.

Dans un mode de réalisation particulier, le SAP est un terpolymère obtenu par la polymérisation d'acrylamide et/ou d'acide acrylique partiellement ou totalement salifié et/ou d'ATBS (acrylamido tertio butylsufonate) partiellement ou totalement salifié et/ou de NVP (N vinylpyrrolidone) et/ou d'acryloylmorpholine et/ou d'acide itaconique partiellement ou totalement salifié.

D'autres monomères hydrophiles, mais aussi des monomères à caractères hydrophobes, pourront être utilisés pour produire les polymères.

Les polymères sont réticulés avec 100 à 6000 ppm d'au moins un agent réticulant choisi dans le groupe comprenant les composés acryliques comme par exemple le méthylène bis acrylamide, allyliques comme par exemple le chlorure de tertra allylammonium, vinyliques comme par exemple le divinyl benzène, diepoxy, sels métalliques...

La stabilité de ces polymères peut être de plusieurs années dans les canalisations ou les réservoirs.

Elle peut être améliorée en procédant à une double réticulation par un réticulant acrylique, avantageusement, à un taux de 100 à 1000 ppm, tel que par exemple le MBA (méthylène bis acrylamide) et un réticulant allylique, avantageusement, à un taux de 1000 à 5000 ppm, tel que par exemple le chlorure tetrallylammonium, qui étend la stabilité du SAP à plus de 5 ans.

Elle peut être également améliorée grâce à l'ajout dans la composition d'agents stabilisants, tels que décrits dans la demande de brevet WO 2010/133258. Il s'agit par exemple d'agents réducteurs d'oxygène comme la dithionite, d'agents capteurs de radicaux libres comme le mercaptobenzothiazole (MBT), d'agent sacrificiels comme l'isopropanol, qui présentent un avantage certain pour la résistance des polymères dans des canalisations rouillées.

Les SAP sont plus stables en milieu légèrement basique. C'est la raison pour laquelle on mélange souvent à 5-10% de carbonate de calcium ou de plus faibles quantités de base comme le carbonate de sodium, phosphate, polyphosphate,.... Cet ajout évite également les problèmes de corrosion des canalisations. On rajoute souvent un bactéricide évitant le développement de bactéries sulfato réductrices spécialement lorsqu'on utilise de l'ATBS. La stabilité en milieu anaérobie basique est de plusieurs dizaines d'années spécialement avec une stabilisation par un bactéricide anaérobiques et/ou d'un ou plusieurs agents réducteurs d'oxygène tels que les sulfite, bisulfite ou dithionite.

Par ailleurs, l'injection peut être améliorée grâce à l'ajout dans la composition, d'agent réducteur de friction, tels que par exemple des polymères hydrosolubles linéaires de haut poids moléculaire.

En d'autres termes, la composition injectée peut, outre le SAP partiellement ou totalement gonflé, comprendre au moins un des éléments suivants :
- des agents stabilisants;
- des agents alcalins ;
- des bactéricides anaérobiques ;
- des agents réducteurs de friction.

Le gonflement de ces SAP dans l'eau distillée atteint généralement 150 à 200 fois, voir 500 fois, mais, dans une eau potable standard, environ 100 fois et moins sur des eaux très salines.

Il faut donc 10 kg de polymère et 990 kg d'eau pour faire une tonne « d'eau solide » pour un gonflement de 100 fois.

Les polyacrylamides ont la capacité de produire des SAP gonflés plus rigides et moins sensibles aux métaux divalents que les polyacrylates.

Avantageusement, le SAP sera gonflé partiellement pour augmenter sa résistance dans le temps car la tension du réseau sera moindre. Plus précisément, il sera avantageux de gonfler le SAP à 10 à 80 %, préférentiellement à 30 à 60% de la capacité maximale de gonflement.

Le SAP pourra être enduit, avant gonflement, d'agents qui retardent le gonflement comme par exemple des huiles, des produits siliconés ou des polyvinylalcools ce qui permettra de maîtriser le délai de gonflement.

La mise en oeuvre est assez simple et comprend les étapes successives suivantes :
- on prépare une composition comprenant le SAP, lequel est partiellement ou totalement gonflé dans de l'eau dans une cuve agitée ou non agitée ;
- on injecte la composition directement depuis la cuve dans la canalisation ou le réservoir avec une pompe volumétrique à faible vitesse type Moineau. Le produit remplit le réservoir ou avance dans la canalisation sous forme de bouchon sans ségrégation. La limite de distance de pompage est déterminée par la pression de la pompe par rapport à la résistance du tuyau. Elle est le plus souvent de plusieurs kilomètres sur des canalisations au-delà de 3 pouces de diamètre. La plupart des canalisations ont des tampons ou des regards répartis sur la distance permettant à la fois la visualisation de l'arrivée de SAP gonflé et une nouvelle injection.

Dans un autre mode de réalisation, on prépare la composition à base de superabsorbant gonflé en usine, puis on la transporte par camion citerne sur le lieu de traitement et on injecte la composition sous pression d'air ou avec une pompe volumétrique.

Dans le cas d'inertage de canalisation, on peut injecter un racleur (pig) type diabolo ou articulé muni d'émetteur permettant de suivre l'avancement du produit. Un racleur type diabolo est une sorte de bouchon du diamètre de la canalisation, généralement en mousse polyuréthanne de haute densité, qui est poussé par la composition comprenant le SAP gonflé.

Il est aussi possible d'injecter la composition comprenant le SAP et l'eau tout de suite après leur mélange. Dans ce cas le SAP n'aura que très peu gonflé et cela pourra permettre de réduire la pression d'injection et d'augmenter la distance sur laquelle la composition sera injectée à partir d'un seul point d'injection.

L'homme de l'art pourra utiliser les techniques à sa disposition afin de ralentir le gonflement du SAP, comme par exemple le choix d'une granulométrie du SAP supérieure à 1 mm.

Lorsque les puits ayant permis l'extraction de pétrole ou de gaz arrivent à la fin de leur exploitation, il est nécessaire de les inerter. Dans ce cas, on propage le SAP partiellement ou totalement gonflé dans le puits par son orifice principal et préférentiellement par le biais de la double paroi du matériel de forage et du tubing (tube métallique utilisé pour les forages). Lorsque les puits se trouvent dans des zones particulières comme par exemple sur un lac gelé, on utilise l'eau du lac pour gonfler le polymère. Par exemple, il faut 1gr de polymère pour faire 100gr de gel, alors qu'il faut transporter 200 à 300 gr de matériaux en ce qui concerne le sable ou le béton maigre.

Avantageusement, après remplissage de la canalisation ou du réservoir, on coule un bouchon de ciment de quelques mètres.

Dans le temps, un suivi visuel de l'état des SAP gonflé peut être facilement effectué grâce aux regards disposés le long des canalisations par exemple.

Lorsqu'après quelques années, le SAP gonflé aura perdu partiellement son état gonflé, une opération d'injection de la composition selon l'invention pourra être renouvelée.

Dans certains cas, le reste de SAP gonflé peut facilement être éliminé en injectant de l'eau sous pression après injection ou non d'un racleur.

L'invention et les avantages qui en découlent ressortiront bien de l'exemple qui suit, à l'appui de la figure annexée.

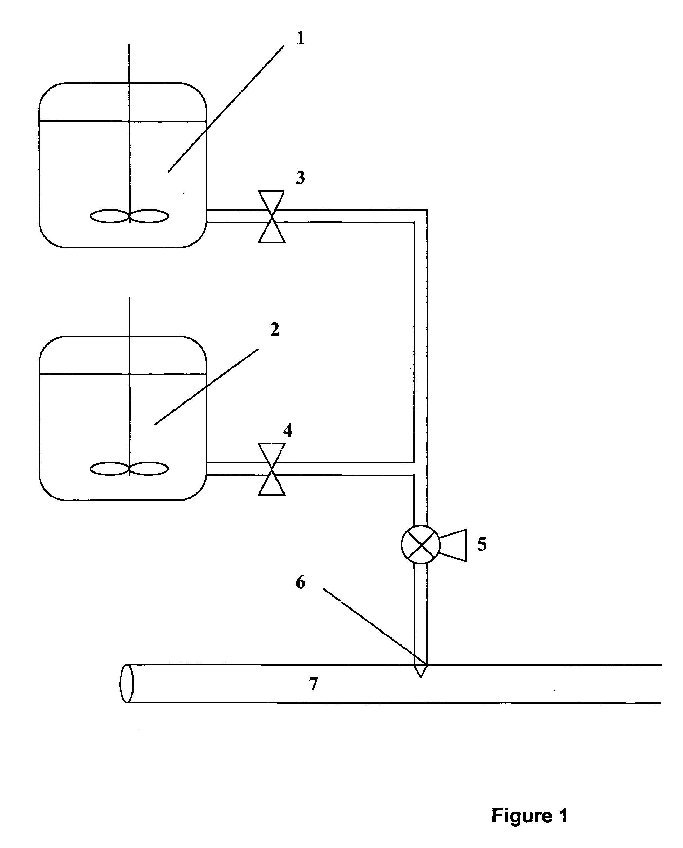

La figure 1 est une représentation d'une installation mettant en oeuvre le procédé de l'invention selon un mode de réalisation.

15 kg de superabsorbant Aquasorb Block (copolymère acrylamide / acrylate de sodium, 70 mol% / 30 mol%) sont ajoutés dans 900 litres d'eau et mélangés à l'aide d'un agitateur (vitesse 100 tours par min) dans un container (1) pendant 25 minutes. La vanne (3) est alors ouverte et la pompe de type moineau est mise en marche pour injecter le SAP gonflé dans la canalisation (7) par le point d'injection (6). La canalisation a une longueur de 1100 mètres dont 750 m en diamètre 100 mm et 350 m en diamètre 150 mm, soit un volume à remplir d'environ 12 m3.

Pendant l'injection la même composition (15 kg de SAP dans 900 litres d'eau) sont mélangés dans le container (2). Une fois le container (1) vidé, la vanne 4 est ouverte et la 3 refermée. C'est alors le contenu du container (2) qui est injecté. L'opération se poursuit jusqu'à ce que la pression d'injection augmente, ce qui traduit le remplissage complet de la canalisation.

Enfin 20 kg de béton sont injectés à chaque extrémité de la canalisation.

L'homme de l'art pourra adapter ces conditions de base aux caractéristiques locales d'inertage.

## Revendications

1. Procédé d'inertage de canalisations, ou de réservoirs enterrés ou de puits de forage consistant :
- à préparer une composition comprenant au moins un (co)polymère superabsorbant partiellement ou totalement gonflé en présence d'eau,
- à injecter ensuite la composition directement dans les canalisations ou le réservoir enterré ou le puits.

2. Procédé selon la revendication 1, **caractérisé en ce que**, une fois l'injection effectuée, on bouche les orifices débouchant des canalisations, réservoirs ou puits.

3. Procédé selon la revendication 2, **caractérisé en ce que** le bouchage est effectué au moyen d'un opercule, d'une vanne, d'un bouchon métallique vissé ou collé, par injection d'une mousse de type polyuréthanne expansée, par cimentation ou ajout de plâtre.

4. Procédé selon l'une des revendications précédentes, **caractérisé en ce que** le (co)polymère superabsorbant est un polymère choisi dans le groupe comprenant :
- les copolymères réticulés dérivés de la polymérisation d'acrylamide et d'acide acrylique partiellement ou totalement salifié, de préférence sous la forme d'un sel de sodium ou de potassium,
- des acides polyacryliques réticulés, partiellement ou totalement salifiés, de préférence sous la forme d'un sel de sodium ou de potassium.

5. Procédé selon l'une des revendications précédentes, **caractérisé en ce que** le (co)polymère superabsorbant est un copolymère réticulé d'acrylamide et d'acide acrylique partiellement ou totalement salifié et contient entre 40 et 90 mol% d'acrylamide et entre 10 et 60 mol% d'acide acrylique partiellement ou totalement salifié.

6. Procédé selon l'une des revendications précédentes, **caractérisé en ce que** le (co)polymère superabsorbant est un terpolymère réticulé obtenu par polymérisation d'acrylamide et/ou d'acide acrylique partiellement ou totalement salifié et/ou d'ATBS (acrylamido tertio butylsufonate) partiellement ou totalement salifié et/ou de NVP (N vinylpyrrolidone) et/ou d'acryloylmorpholine et/ou d'acide itaconique partiellement ou totalement salifié.

7. Procédé selon l'une des revendications précédentes, **caractérisé en ce que** le (co)polymère superabsorbant subit une double réticulation par un réticulant acrylique à un taux de 100 à 1000 ppm et à un réticulant allylique à un taux de 1000 à 5000 ppm.

8. Procédé selon la revendication 7, **caractérisé en ce que** le réticulant acrylique est le MBA (méthylène bis acrylamide) et **en ce que** le réticulant allylique est le chlorure de tetrallylammonium.

9. Procédé selon l'une des revendications précédentes, **caractérisé en ce que** la composition contient en outre au moins un des éléments suivants :
- des agents stabilisants ;
- des agents alcalins ;
- des bactéricides anaérobiques ;
- des agents réducteurs de friction.

10. Procédé selon l'une des revendications précédentes, **caractérisé en ce que** le (co)polymère superabsorbant est gonflé à 10 à 60 % de sa capacité maximale de gonflement

11. Procédé selon l'une des revendications précédentes, **caractérisé en ce que** préalablement à l'injection de la composition, on injecte un racleur.

12. Procédé selon l'une des revendications précédentes, **caractérisé en ce qu'**on prépare la composition à base de superabsorbant gonflé en usine, puis on la transporte par camion citerne sur le lieu de traitement et on injecte la composition sous pression d'air ou avec une pompe volumétrique.

13. Procédé selon l'une des revendications précédentes, **caractérisé en ce que** la composition à base de polymère est éliminée en injectant de l'eau sous pression après injection ou non d'un racleur.

14. Procédé selon l'une des revendications précédentes, **caractérisé en ce qu'**on renouvelle l'injection après quelques mois ou quelques années.

## Patentansprüche

1. Verfahren zur Inertisierung von Leitungen, unterirdischen Tanks oder Bohrlöchern, welches darin besteht,
- eine Zusammensetzung mit mindestens einem superabsorbierenden, teilweise oder vollständig in Anwesenheit von Wasser gequellten (Co)Polymer herzustellen,
- die Zusammensetzung anschließend direkt in die Leitungen bzw. in den unterirdischen Tank oder in das Bohrloch einzuspeisen.

2. Verfahren nach Anspruch 1, **dadurch gekennzeichnet, dass** nach der Einspeisung die in die Leitungen, Tanks oder Bohrlöcher mündenden Öffnungen verschlossen werden.

3. Verfahren nach Anspruch 1, **dadurch gekennzeichnet, dass** das Verschließen mittels eines Deckels, eines Ventils, eines geschraubten oder geklebten metallischen Stopfens, durch Einspeisung eines Schaums des Typs eines expandierbaren Polyurethans, durch Zementierung oder durch Gipshinzufügung erfolgt.

4. Verfahren nach einem der vorhergehenden Ansprüche, **dadurch gekennzeichnet, dass** das superabsorbierende (Co)Polymer ein Polymer aus der Gruppe ist, welche
- die vernetzten Copolymere, die aus der Polymerisierung von Acrylamid und teilweise oder vollständig bevorzugt in Form eines Natrium- oder Kaliumsalzes versalzter Acrylsäure resultieren,
- vernetzte Polyacrylsäuren, die teilweise oder vollständig bevorzugt in Form eines Natrium- oder Kaliumsalzes versalzt sind,
enthält.

5. Verfahren nach einem der vorhergehenden Ansprüche, **dadurch gekennzeichnet, dass** das superabsorbierende (Co)Polymer ein vernetztes Copolymer aus Acrylamid und teilweise oder vollständig versalzter Acrylsäure ist und zwischen 40 und 90 Mol-% Acrylamid und zwischen 10 und 60 Mol-% teilweise oder vollständig versalzte Acrylsäure enthält.

6. Verfahren nach einem der vorhergehenden Ansprüche, **dadurch gekennzeichnet, dass** das superabsorbierende (Co)Polymer ein vernetztes Terpolymer ist, das durch Polymerisierung von Acrylamid und/oder teilweise oder vollständig versalzter Acrylsäure und/oder teilweise oder vollständig versalztem ATBS (Acrylamidotertiärbutylsulfonsäure) und/oder NVP (N-Vinylpyrrolidon) und/oder Acryloylmorpholin und/oder teilweise oder vollständig versalzter Itaconsäure gewonnen wird.

7. Verfahren nach einem der vorhergehenden Ansprüche, **dadurch gekennzeichnet, dass** das superabsorbierende (Co)Polymer doppelt vernetzt wird mittels eines Acrylvernetzers mit einem Vernetzungsgrad von 100 bis 1000 ppm und mittels eines Allylvernetzers mit einem Vernetzungsgrad von 1000 bis 5000 ppm.

8. Verfahren nach Anspruch 7, **dadurch gekennzeichnet, dass** es sich beim Acrylvernetzer um MBA (Methylen-bis-acrylamid) handelt und beim Allylvernetzer um Tetrallylammoniumchlorid handelt.

9. Verfahren nach einem der vorhergehenden Ansprüche, **dadurch gekennzeichnet, dass** die Zusammensetzung ferner mindestens einen der folgenden Bestandteile enthält:
- Stabilisierungsmittel,
- alkalische Mittel,
- anaerobe bakterizide Mittel,
- reibungsreduzierende Mittel.

10. Verfahren nach einem der vorhergehenden Ansprüche, **dadurch gekennzeichnet, dass** das superabsorbierende (Co)Polymer zu 10 bis 60 % seiner maximalen Quellkapazität gequellt wird.

11. Verfahren nach einem der vorhergehenden Ansprüche, **dadurch gekennzeichnet, dass** vor der Einspeisung der Zusammensetzung ein Molch eingespeist wird.

12. Verfahren nach einem der vorhergehenden Ansprüche, **dadurch gekennzeichnet, dass** die Zusammensetzung mit werkseitig gequelltem Superabsorber hergestellt wird, sie anschließend per Tankwagen zum Verarbeitungsort verbracht wird und unter Luftdruck oder mittels einer Verdrängerpumpe eingespeist wird.

13. Verfahren nach einem der vorhergehenden Ansprüche, **dadurch gekennzeichnet, dass** die aus Polymer hergestellte Zusammensetzung durch Einspeisung von Druckwasser abgeführt wird, nachdem ein Molch eingespeist wurde oder nicht.

14. Verfahren nach einem der vorhergehenden Ansprüche, **dadurch gekennzeichnet, dass** die Einspeisung nach einigen Monaten oder Jahren erneut erfolgt.

## Claims

1. A method of inerting pipelines, or buried tanks or wellbores consisting of:
- preparing a composition comprising at least one superabsorbent (co)polymer partially or fully swollen in the presence of water,
- then injecting the composition directly into the pipelines or buried tank or well.

2. The method as claimed in claim 1, wherein, once injection has been carried out, the openings of the pipelines, tanks or wells are sealed.

3. The method as claimed in claim 2, wherein sealing is carried out by means of a cover, a valve, a screwed or glued metal plug, by injecting foam of the expanded polyurethane type, by cementing or addition of plaster.

4. The method as claimed in one of the preceding claims, wherein the superabsorbent (co)polymer is a polymer selected from the group comprising:
- crosslinked copolymers derived from the polymerization of acrylamide and of partially or fully salified acrylic acid, preferably in the form of a sodium salt or potassium salt,
- crosslinked polyacrylic acids, partially or fully salified, preferably in the form of a sodium salt or potassium salt.

5. The method as claimed in one of the preceding claims, wherein the superabsorbent (co)polymer is a crosslinked copolymer of acrylamide and of partially or fully salified acrylic acid and contains between 40 and 90 mol% of acrylamide and between 10 and 60 mol% of partially or fully salified acrylic acid.

6. The method as claimed in one of the preceding claims, wherein the superabsorbent (co)polymer is a crosslinked terpolymer obtained by polymerization of acrylamide and/or of partially or fully salified acrylic acid and/or of partially or fully salified ATBS (acrylamido tert-butyl sulfonate) and/or of NVP (N-vinylpyrrolidone) and/or of acryloyl morpholine and/or of partially or fully salified itaconic acid.

7. The method as claimed in one of the preceding claims, wherein the superabsorbent (co)polymer undergoes a double crosslinking with an acrylic crosslinking agent in a proportion from 100 to 1000 ppm and with an allylic crosslinking agent in a proportion from 1000 to 5000 ppm.

8. The method as claimed in claim 7, wherein the acrylic crosslinking agent is MBA (methylene bisacrylamide) and wherein the allylic crosslinking agent is tetra-allylammonium chloride.

9. The method as claimed in one of the preceding claims, wherein the composition additionally contains at least one of the following elements:
- stabilizers;
- alkaline agents;
- anaerobic bactericides;
- friction reducing agents.

10. The method as claimed in one of the preceding claims, wherein the superabsorbent (co)polymer is swollen to 10 to 60% of its maximum swelling capacity.

11. The method as claimed in one of the preceding claims, wherein a pig is injected prior to injection of the composition.

12. The method as claimed in one of the preceding claims, wherein the composition based on swollen superabsorbent is prepared in the factory, then it is transported by road tanker to the treatment site and the composition is injected under air pressure or with a positive-displacement pump.

13. The method as claimed in one of the preceding claims, wherein the composition based on polymer is removed by injecting water under pressure, with or without previous injection of a pig.

14. The method as claimed in one of the preceding claims, wherein injection is repeated after some months or some years.
